# EUROPEAN PATENT APPLICATION

(11) **EP 3 763 497 A1**
(43) Date of publication of application: **13.01.2021**
(21) Application number: 19764194.7
(22) Date of filing: 05.03.2019
(51) Int. Cl.: B26D 3/02, B26D 1/00, B26D 5/06, B26D 7/20

(54) **CUTTING APPARATUS AND FILM LAMINATE CHAMFERING METHOD USING SAME**

(30) Priority: 07.03.2018 KR 20180026732
(71) Applicant: LG CHEM, LTD., Yeongdeungpo-gu, Seoul 07336 (KR)
(72) Inventor: KIM, Young Tae, Daejeon 34122 (KR); PARK, Seul Ki, Daejeon 34122 (KR); LIM, Bum Seung, Daejeon 34122 (KR); YANG, Do Weon, Daejeon 34122 (KR); HONG, Yu Shik, Daejeon 34122 (KR)
(74) Representative: Goddar, Heinz J.
(86) International application number: PCT/KR2019/002506
(87) International publication number: WO 2019/172602

(57) **Abstract**

The present invention relates to a cutting apparatus and a method for chamfering a film stack using the same, and according to one aspect of the present invention, the microcracks generated in the film stack during curved surface chamfering can be reduced, the maximum stress applied to the film stack can be reduced, the lifting can be prevented, and the curved surface processing enables, so that the deformed cutting product can be produced.

## Description

### Technical Field

The present invention relates to a cutting apparatus and a method for chamfering a film stack using the same, and particularly, relates to a cutting apparatus capable of curved surface processing of a film stack at the time of chamfering it, and a method for chamfering a film stack using the same.

This application claims the benefit of priority based on Korean Patent Application No. 10-2018-0026732 filed on March 7, 2018, the disclosure of which is incorporated herein by reference in its entirety.

### Background Art

A chamfering machine has been used to cut a film for display to a desired size, and generally, a chamfering process has been performed in the form of a film stack in which a number of films for display are stacked.

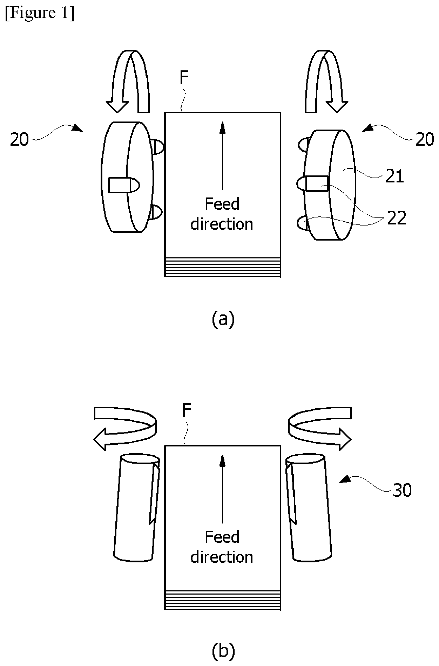

Figure 1 is a conceptual diagram for explaining a general chamfering process.

Referring to Figure 1, in the chamfering process of the film stack (F), a face-cut (F/C) type chamfering machine (10) shown in Figure 1(a) and an end mill (E/D) type chamfering machine (30) shown in Figure 1(b) have been used. At this time, in the case of the F/C type chamfering machine (10), cutting devices (20) are each provided on both sides of the film stack (F) in the transport direction, where the cutting device (20) includes a rotating wheel (21) and a plurality of cutting bites (22) mounted on the rotating wheel (21). Here, the chamfering method proceeds in such a manner that cuts the film stack (F) when the cutting bites rotate in accordance with rotation of the rotating wheel (12).

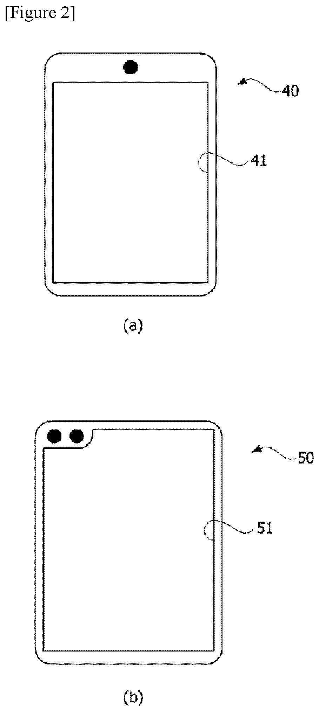

Figure 2 is schematic diagrams showing a general cutting product (Figure 2(a)) and a deformed cutting product (Figure 2(b)). Referring to Figure 2, in the case of the general cutting product (410), only linear processing is required on the inner circumference (41), but in the case of the deformed cutting product (50), curved surface processing (see Reference Numeral 52) is required on the inner circumference (51).

However, there is a problem that defects due to lifting during curved surface processing occur in the conventional chamfering machine as described in Figure 1.

### Disclosure

### Technical Problem

It is an object of the present invention to provide a cutting apparatus capable of curved surface processing of a film stack at the time of chamfering it and a method for chamfering a film stack using the same.

### Technical Solution

In order to solve the above-described object, according to one aspect of the present invention, there is provided a cutting apparatus used in a chamfering process of a film stack, comprising: a cutting bite including a body having a central axis and a cutting blade spirally provided on the outer circumferential surface of the body along the central axis so as to perform chamfering of the film stack depending on rotation of the body; a first driving part for rotating the body based on the central axis; and a second driving part for moving the body, wherein the cutting blade is provided to incline at a predetermined angle within an angle range of 5° to 15° or 30° to 60° with respect to the central axis of the body.

In addition, according to another aspect of the present invention, there is provided a method for chamfering a film stack, comprising a chamfering step of performing chamfering of a film stack using the cutting apparatus, wherein a chamfered area of the film stack in the chamfering step includes a curved area.

### Advantageous Effects

As described above, the cutting apparatus related to one example of the present invention and the chamfering method of a film stack using the same have the following effects.

The microcracks generated in the film stack during curved surface chamfering can be reduced, the maximum stress applied to the film stack can be reduced, the lifting can be prevented, and the curved surface processing enables, so that the deformed cutting product can be produced.

### Brief Description of Drawings

Figure 1 is a conceptual diagram for explaining a general chamfering process.
Figure 2 is schematic diagrams showing a general cutting product and a deformed cutting product.
Figure 3 is a schematic diagram showing a cutting apparatus related to one example of the present invention.
Figure 4 is side views showing various examples of a cutting bite.
Figure 5 is a side view of the cutting bite shown in Figure 3;
Figure 6 is side views showing various examples of a cutting bite.
Figure 7 is a graph showing analysis results of a cutting blade according to angles with respect to the central axis.

### Mode for Invention

Hereinafter, a cutting apparatus according to one example of the present invention and a method for chamfering a film stack using the same will be described in detail with reference to the accompanying drawings.

In addition, the same or similar reference numerals are given to the same or corresponding components regardless of reference numerals, of which redundant explanations will be omitted, and for convenience of explanation, the size and shape of each constituent member as shown may be exaggerated or reduced.

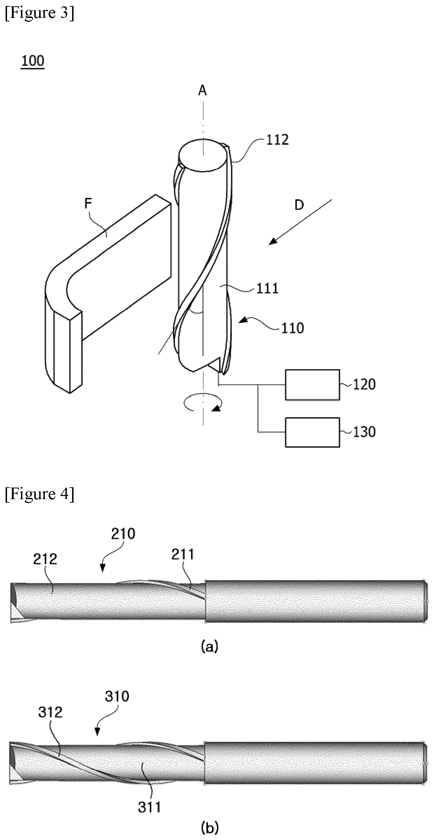

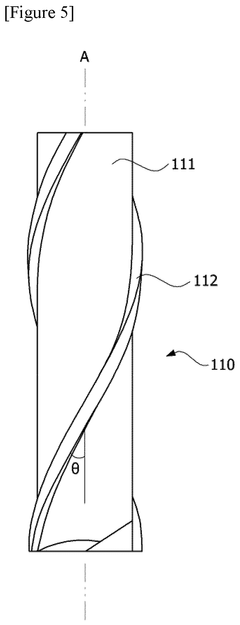

Figure 3 is a schematic diagram showing a cutting apparatus (100) related to one example of the present invention; Figure 4 is side views showing various examples of a cutting bite (210, 310); and Figure 5 is a side view of the cutting bite (110) shown in Figure 3.

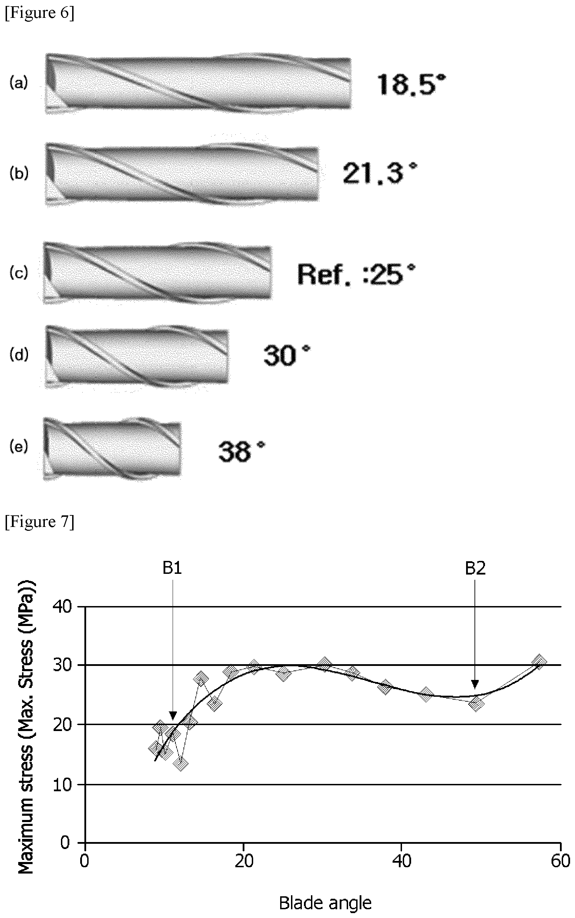

Figure 6 is side views showing various examples of a cutting bite; and Figure 7 is a graph showing analysis results of a cutting blade according to angles with respect to the central axis.

The present invention relates to a cutting apparatus (100) used in a chamfering process of a film stack (F). Particularly, the cutting apparatus (100) is capable of curved surface processing of a film stack (F) when chamfering.

The cutting apparatus (100) comprises a cutting bite (110), a first driving part (120), and a second driving part (130).

Specifically, the cutting bite (110) comprises a body (110) having a central axis (A) and a cutting blade (112) spirally provided on the outer circumferential surface of the body (110) along the central axis (A) so as to perform chamfering of the film stack (F) depending on rotation of the body (110).

The body (111) may have a cylindrical shape and may be formed of a metal material having rigidity, and for example, may be formed of a metal material such as a superhard material, or a ceramic material. The body (111) may have, for example, a diameter of approximately 2 to 8mm and a length of approximately 25mm (length in the central axis direction).

The body (110) is rotated based on the central axis (A) by the first driving part (130). In addition, the rotation speed of the body (100) is adjustable. On the other hand, the first driving part (130) may also rotate the body (110) at a fixed rotational speed when cutting, and alternatively, may also change the rotational speed of the body (110) at least in part when cutting.

Referring to Figure 4, the cutting blade may comprise a single or double blade (211, 312). Figure 4(a) shows the cutting bite (210) with the single blade (211). That is, the cutting bite (210) comprises a body (211) and a single cutting blade (212) spirally provided on the outer circumferential surface of the body along the central axis (A). Figure 5(b) shows the cutting bite (210) with the double blade (312). That is, the cutting bite (210) comprises a body (211) and a double cutting blade (312) each spirally provided on the outer circumferential surface of the body along the central axis (A).

Also, the first driving part (120) performs a function of rotating the body (110) based on the central axis (A). The first driving part (120) may be constituted by a known means such as a motor capable of rotating forward or backward.

In addition, the second driving part (130) performs a function of moving (transporting) the body (111).

Referring to Figure 5, the cutting blade (112) may be provided to incline at a predetermined angle (θ) within an angle range of 5° to 15° or 30° to 60° with respect to the central axis (A) of the body (111). Thus, the maximum stress applied to the film stack at the time of chamfering varies depending on the inclined angle (θ) of the cutting blade (112).

Preferably, the angle range may be set to be inclined at a predetermined angle (θ) within an angle range of 7° to 12° or 45° to 55°. More preferably, the cutting blade (112) may be provided to incline at an angle of 10° or 50° with respect to the central axis (A) of the body (111).

Referring to Figure 7, the maximum stress appears to be low at points B1 (about 10°) and B2 (about 50°), where it can be confirmed that these angles are optimal angles.

Furthermore, the second driving part (130) may be provided to move the body (111) along a direction (D) orthogonal to the central axis (A) of the body (111), and particularly, the second driving part (130) may be provided to move the cutting bite (100) along a curved path in at least some sections.

Hereinafter, a method for chamfering a film stack using the cutting apparatus having the above-described structure will be described.

The chamfering method of the film stack comprises a chamfering step of performing chamfering a film stack (F) using the cutting apparatus (100), wherein a chamfered area of the film stack in the chamfering step includes a curved area. That is, the curved surface processing area is included when chamfering.

In the chamfering step, the method comprises a step of rotating the cutting bite (110) and simultaneously moving it, by the first driving part and the second driving part, and comprises a step of moving the cutting bite along a curved path in at least some sections.

The preferred examples of the present invention as described above are disclosed for illustrative purposes, which can be modified, changed and added within thought and scope of the present invention by those skilled in the art and it will be considered that such modification, change and addition fall within the following claims.

### Industrial Applicability

According to the cutting apparatus related to one example of the present invention and the method for chamfering a film stack using the same, the microcracks generated in the film stack during curved surface chamfering can be reduced, the maximum stress applied to the film stack can be reduced, the lifting can be prevented, and the curved surface processing enables, so that the deformed cutting product can be produced.

## Claims

1. A cutting apparatus used in a chamfering process of a film stack, comprising:
a cutting bite including a body having a central axis and a cutting blade spirally provided on the outer circumferential surface of the body along the central axis so as to perform chamfering of the film stack depending on rotation of the body;
a first driving part for rotating the body based on the central axis; and
a second driving part for moving the body,
wherein the cutting blade is provided to incline at a predetermined angle within an angle range of 5° to 15° or 30° to 60° with respect to the central axis of the body.

2. The cutting apparatus according to claim 1,
wherein the angle range is set to be inclined at a predetermined angle within an angle range of 7° to 12° or 45° to 55°.

3. The cutting apparatus according to claim 2,
wherein the cutting blade is provided to incline at 10° or 50° with respect to the central axis of the body.

4. The cutting apparatus according to claim 1,
wherein the body has a cylindrical shape.

5. The cutting apparatus according to claim 1,
wherein the second driving part is provided to move the body along a direction orthogonal to the central axis of the body.

6. The cutting apparatus according to claim 5,
wherein the second driving part is provided to move the cutting bite along a curved path in at least some sections.

7. The cutting apparatus according to claim 1,
wherein the cutting blade comprises a single or dual blade.

8. A method for chamfering a film stack, comprising a chamfering step of performing chamfering of a film stack using the cutting apparatus according to any one of claims 1 to 7, wherein a chamfered area of the film stack in the chamfering step includes a curved area.

9. The method for chamfering a film stack according to claim 8,
wherein in the chamfering step, the cutting bite is rotated and simultaneously moved.

10. The method for chamfering a film stack according to claim 9,
wherein the cutting bite is moved along a curved path in at least some sections.
